# FASCICULE DE BREVET EUROPEEN

(11) **EP 3 649 886 B1**
(45) Date de publication et mention de la délivrance du brevet: **12.03.2025**
(21) Numéro de dépôt: 19207912.7
(22) Date de dépôt: 08.11.2019
(51) Int. Cl.: A45D 40/26, A46B 9/02

(54) **APPLICATEUR POUR PRODUIT COSMÉTIQUE, NOTAMMENT DU MASCARA, ENSEMBLE APPLICATEUR ASSOCIÉ ET PROCÉDÉ DE FABRICATION D'UN TEL APPLICATEUR**
APPLIKATOR FÜR KOSMETISCHE PRODUKTE, INSBESONDERE MASCARA, ENTSPRECHEND APPLIKATOREINHEIT UND VERFAHREN ZUR HERSTELLUNG EINES SOLCHEN APPLIKATORS
APPLICATOR FOR COSMETIC PRODUCT, IN PARTICULAR MASCARA, ASSOCIATED APPLICATOR UNIT AND METHOD FOR MANUFACTURING SUCH AN APPLICATOR

(30) Priorité: 09.11.2018 FR 1860349
(43) Date de publication de la demande: 13.05.2020
(73) Titulaire: Albéa Services, 92230 Gennevilliers (FR)
(72) Inventeur: CRAPET, Yann, 95830 Frémécourt (FR)
(74) Mandataire: Gevers & Orès

(56) Documents cités:
- WO-A1-2016/166462
- FR-A1- 2 912 620
- FR-A1- 2 937 514

## Description

L'invention concerne un applicateur pour produit cosmétique, notamment du mascara, et un ensemble applicateur associé. L'invention concerne en outre un procédé pour la fabrication d'un tel applicateur.

Les applicateurs mascara peuvent être obtenus à partir d'éléments fibreux maintenus entre les parties longitudinales d'une broche métallique torsadée ; ils sont alors communément appelés « brosses torsadées ». Les extrémités des éléments fibreux forment habituellement des enveloppes selon une direction d'extension longitudinale de la brosse. Les brosses torsadées présentent, par leur mode de fabrication, une enveloppe de forme cylindrique qui offre peu de possibilités en termes d'effets de maquillage. De nombreuses solutions ont déjà été proposées pour conférer des formes variées à des brosses torsadées.

Les applicateurs mascara peuvent aussi être obtenus par moulage par injection de matière plastique, ils sont alors communément appelés « brosses plastiques ». Ainsi les brosses plastiques peuvent présenter des formes originales afin de proposer des effets de maquillage particuliers.

FR 2 912 620 A1 et FR 2 937 514 A1 divulguent des applicateurs cosmétiques de l'état de la technique.

Il existe cependant toujours un besoin de perfectionnement des applicateurs mascara, notamment pour obtenir des applicateurs assurant une charge suffisante en produit cosmétique et une bonne restitution de celui-ci, tout en conservant une 25 souplesse d'application du produit cosmétique.

L'invention concerne un applicateur pour produit cosmétique, selon la revendication 1, et un ensemble applicateur associé, selon la revendication 6. L'invention concerne en outre un procédé pour la fabrication d'un tel applicateur, selon la revendication 7. Les caractéristiques préférées de l'invention sont définies dans les revendications dépendantes.

L'invention concerne un applicateur pour produit cosmétique, comprenant une âme s'étendant le long d'une direction d'extension longitudinale X, dite direction principale, et une pluralité de protubérances venues de matière avec l'âme, les protubérances s'étendant d'une extrémité proximale reliée à l'âme vers une extrémité distale libre selon une direction d'élongation de manière à définir une longueur.

Au moins une partie des protubérances, dites protubérances non-linéaires, présente une génératrice non-linéaire sur au moins une partie de leur longueur. Une partie desdites protubérances non-linéaires sont implantées pour constituer une pluralité de groupes dans chacun desquels lesdites protubérances non-linéaires sont agencées de manière à délimiter centralement un espace formant un réservoir de produit cosmétique. Le groupe de protubérances comprend au moins trois protubérances non-linéaires. Tout ou partie des protubérances non-linéaires présentent au moins un enroulement hélicoïdal sur au moins une portion de leur longueur, dite portion d'enroulement hélicoïdal. L'enroulement hélicoïdal des protubérances non-linéaires d'un même groupe est sensiblement de même sens et de même pas de manière que les protubérances semblent torsadées entre-elles.

Autrement dit, les protubérances sont disposées à la surface de l'âme de manière à ce qu'elles définissent les limites d'un volume définissant une zone de stockage de produit cosmétique. Ainsi, leur agencement permet de former en leur centre un réservoir de produit cosmétique. Le produit cosmétique est ainsi piégé dans ce volume. L'applicateur peut ainsi garder plus de produit cosmétique lorsqu'il est essoré, notamment lors de sa sortie d'un récipient de stockage du produit cosmétique. L'applicateur présente alors un chargement important en produit cosmétique pour pouvoir maquiller en un seul coup toute la zone à maquiller voire plusieurs zones.

Par ailleurs, le profil non-linéaire des protubérances permet avantageusement d'augmenter la longueur de la protubérance et ainsi créer un effet de souplesse lors du maquillage.

Selon différents modes de réalisation, qui pourront être pris ensemble ou séparément :
- les protubérances font saillie à partir de l'âme,
- les protubérances sont agencées sur tout le pourtour de l'âme,
- les protubérances présentent un profil effilé,
- l'espace formant un réservoir présente une section transversale polygonale chacune des protubérances étant un sommet du polygone,
- l'enroulement hélicoïdal présente au moins une spire,
- toutes les protubérances présentent un enroulement hélicoïdal,
- ledit au moins un enroulement hélicoïdal est situé sur une portion radialement distale des protubérances,
- ledit au moins un enroulement hélicoïdal s'étend sur au moins 1/4 de la longueur des protubérances, voire sur au moins 1/3, 1/2, 2/3, 3/4, de la longueur des protubérances,
- ledit au moins un enroulement hélicoïdal s'étend sur toute la longueur des protubérances,
- les protubérances comprennent au moins une rainure,
- la rainure s'étend parallèlement audit au moins un enroulement hélicoïdal,
- la rainure s'étend en s'enroulant autour de la protubérance,
- la section transversale des protubérances présente au moins une rainure, voire deux, voire trois, voire quatre rainures,
- les groupes de protubérances sont agencées sous forme de rangées longitudinales, les rangées étant sensiblement parallèles à la direction principale X,
- les groupes de protubérances sont agencées sous forme de rangées longitudinales, les rangées s'enroulant de manière hélicoïdale autour de l'âme,
- l'applicateur est obtenu par fabrication additive.

L'invention concerne aussi un ensemble applicateur pour produit cosmétique, comprenant :
- un récipient comprenant un corps formant un réservoir destiné à contenir le produit cosmétique, et
- un applicateur du produit cosmétique tel que définit précédemment adapté pour être fixé sur le récipient, de sorte que l'applicateur est logé à l'intérieur du réservoir.

L'invention concerne enfin un procédé pour la fabrication d'un applicateur pour produit cosmétique, notamment mascara, tel que définit précédemment. Le procédé comprend :
- une étape d'élaboration d'un modèle numérique de l'applicateur ;
- une étape de fabrication de l'applicateur au moyen du modèle numérique.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés. Sur ces dessins :
- la figure 1 est une vue en coupe d'un exemple d'ensemble applicateur selon l'invention;
- la figure 2 est une vue de côté d'un applicateur selon un premier mode de réalisation ;
- la figure 3 est une vue de côté et de détail des protubérances de l'applicateur de la figure 2 ;
- la figure 4 est une vue de dessus de l'applicateur de la figure 2 ;
- la figure 5 est une vue de côté d'un applicateur selon un deuxième mode de réalisation ;
- la figure 6 est une vue de côté et de détail des protubérances de l'applicateur de la figure 5 ;
- la figure 7 est une vue isométrique et de détail des protubérances de l'applicateur de la figure 5 ;
- la figure 8 est une vue de côté d'un applicateur selon un troisième mode de réalisation ;
- la figure 9 est une vue de côté et de détail des protubérances de l'applicateur de la figure 8 ;
- la figure 10 est une vue isométrique et de détail des protubérances de l'applicateur de la figure 8 ; la figure 11 est une vue de côté d'une partie d'un applicateur selon un quatrième mode de réalisation de l'invention.

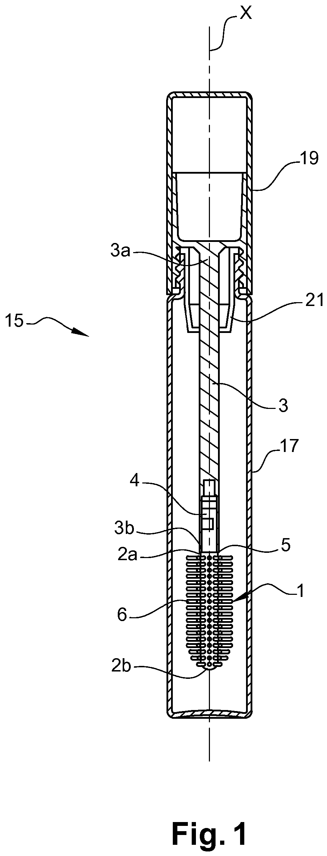

Comme illustré sur la figure 1, l'invention concerne un applicateur 1 pour produit cosmétique, notamment pour mascara, comprenant une âme 2 s'étendant le long d'une direction d'extension longitudinale, dite direction principale et repérée X sur la figure 1.

L'âme 2 présente une première extrémité 2a, appelée aussi extrémité proximale, apte à être fixée à une tige 3 d'applicateur 1 par un manchon 4 prolongeant l'âme 2, et une deuxième extrémité 2b libre, appelée aussi extrémité distale, opposée à la première extrémité 2a le long de la direction principale X. De façon classique, le manchon 4 s'étend à partir d'un anneau de butée 5.

L'âme 2 peut être pleine ou creuse sans sortir du cadre de l'invention.

L'âme 2 présente ici une section transversale par rapport à la direction principale X qui est circulaire. Dans des modes de réalisation non représentés, l'âme 2 peut aussi présenter une section transversale polygonale, telle que triangulaire, ou en forme de quadrilatère, sans sortir du cadre de l'invention.

L'âme 2 est de préférence de section transversale sensiblement constante de sa première extrémité 2a à sa deuxième extrémité 2b, tout du moins jusqu'à une partie évasée qui peut éventuellement être présente au niveau de la deuxième extrémité 2b de l'âme 2.

L'applicateur 1 comprend en outre une pluralité de protubérances 6 venues de matière avec l'âme 2. L'âme 2 et les protubérances 6 sont ainsi réalisées en une seule pièce. A noter que le manchon 4 est dépourvu de protubérances 6.

Les protubérances 6 font saillie à partir de l'âme 2. Autrement dit, les protubérances 6 s'étendent en saillie à partir de l'âme 2.
De façon avantageuse, les protubérances 6 sont agencées sur tout le pourtour/la périphérie de l'âme 2.
Dans les modes de réalisation représentés dans les différentes figures, certaines protubérances 6 font saillie à partir de l'âme 2 suivant une direction sensiblement normale par rapport à la direction principale X, dite direction radiale, alors que d'autres protubérances 6 font saillie à partir de l'âme 2 en formant un angle avec l'axe principal X différent de 90°. Autrement dit, certaines protubérances 6 peuvent être inclinées vers la deuxième extrémité 2b de l'âme 2 ou inclinées vers la première extrémité 2a de l'âme 2.

De façon avantageuse, les protubérances présentent un profil effilé.

Les protubérances 6 s'étendent d'une extrémité proximale 6b reliée à l'âme 2 vers une extrémité distale 6a libre selon une direction d'élongation de manière à définir une hauteur H et une longueur L.

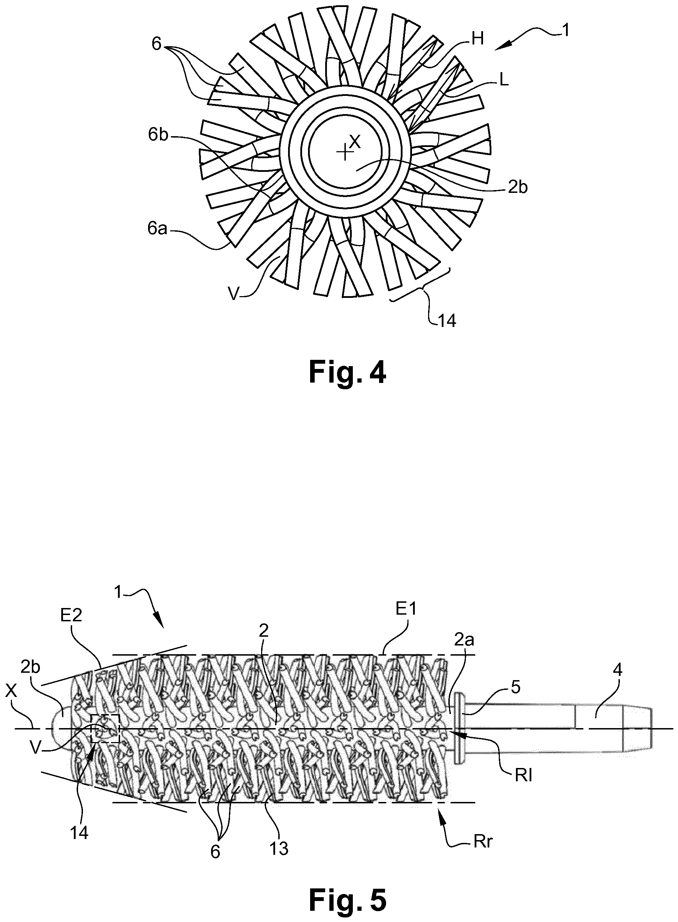

On entend par « hauteur des protubérances », la hauteur H mesurée entre la périphérie radiale de de l'âme 2 et l'extrémité distale 6a libre de la protubérance (voir figure 4). Autrement dit on entend par « hauteur des protubérances » leur extension radiale mesurée à partir de la base de la protubérance 6, en projection sur un plan orthogonal à l'axe principal X.

Ainsi, comme repérée sur la figure 4, la hauteur H des protubérances 6 est de l'ordre, par exemple, de 4mm.

On entend par « longueur des protubérances », la distance L mesurée de la base de la protubérance 6, c'est-à-dire de l'extrémité proximale 6b à l'extrémité distale 6a libre (voir figure 4).

On entend par « les protubérances 6 font saillie à partir de l'âme 2 suivant une direction sensiblement normale par rapport à la direction principale X », des protubérances 6 qui font saillie dans un plan comprenant la direction principale X et une direction radiale de la direction principale X. Autrement dit, les protubérances 6 pourront être inclinées, dans ce plan, vers l'extrémité proximale et/ou distale, ceci sans sortir du cadre de l'invention.

De préférence, les protubérances 6 présentent toutes sensiblement une même hauteur H. Autrement dit, la distance entre la périphérie radiale de l'âme 2 et l'extrémité libre 6a des protubérances 6 est sensiblement la même pour toutes les protubérances 6 que comprend l'applicateur 1. Les protubérances 6 forment ainsi une enveloppe sensiblement cylindrique.

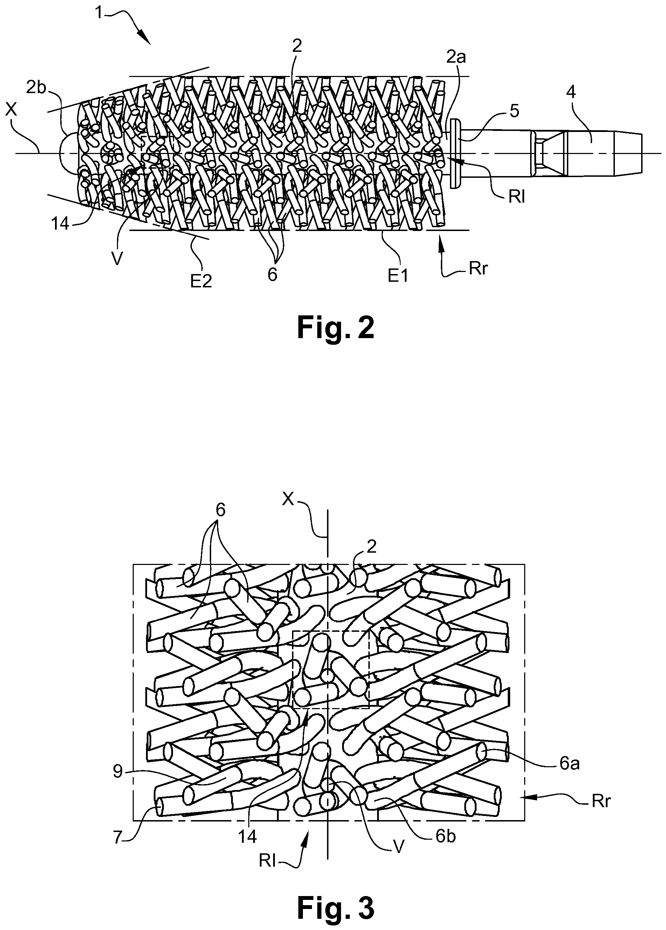

Cependant, les protubérances 6 dites distales, c'est-à-dire les protubérances 6 qui s'étendent à proximité de la deuxième extrémité 2b de l'âme 2 peuvent présenter des hauteurs H différentes de manière, par exemple, à former une enveloppe E2 en forme d'ogive comme représentée aux figures 2, 5 et 8. Les protubérances 6 qui s'étendent entre la première extrémité 2a de l'âme 2 et les protubérances 6 distales forment quant à elles une enveloppe sensiblement cylindrique E1 (voir figures 2, 5 et 8).

L'enveloppe en forme d'ogive facilite notamment l'insertion de l'applicateur 1 à travers le goulot du récipient contenant le produit cosmétique et l'application du produit cosmétique au niveau du coin interne de l'œil.

Dans une variante de réalisation non représentée, les protubérances 6 peuvent présenter une hauteur H différente d'une rangée RI, Rr à l'autre (les rangées RI et Rr étant décrites ci-après en relation avec les groupes de protubérances).

Les extrémités distales 6a libres des protubérances 6 forment alors une enveloppe dont la forme peut varier sans sortir du cadre de l'invention. Par exemple, 7 la hauteur H des protubérances 6 pourra varier à l'intérieur d'une même rangée longitudinale et/ou radiale RI, Rr, de la première extrémité 2a à la deuxième extrémité 2b de l'âme 2, pour former des enveloppes au moins en partie sensiblement concaves, convexes, voire des enveloppes présentant plusieurs sommets.

Dans les modes de réalisation représentés ici, les protubérances 6 présentent une section transversale 7 dont la dimension est constante de l'extrémité proximale 6b à l'extrémité distale 6a. La section transversale 7 d'une protubérance 6 est la section réalisée dans un plan orthogonal à la direction d'extension longitudinale de la protubérance 6.

Dans une variante de réalisation non représentée, les dimensions de la section transversale 7 sont plus élevées au voisinage de l'extrémité proximale 6b qu'au voisinage de l'extrémité distale 6a de la protubérance 6. Autrement dit, la section transversale 7 de la protubérance 6 présente des dimensions qui évoluent de l'extrémité proximale 6b vers l'extrémité distale 6a.

Selon l'invention, au moins une partie des protubérances présente une génératrice non-linéaire, notamment en forme d'hélice, sur au moins une partie de leur longueur L. Ces protubérances seront appelées par la suite protubérances non-linéaires.

Tout ou partie des protubérances 6 non-linéaires présente au moins un enroulement hélicoïdal 9 sur au moins une portion de leur longueur L, dite portion d'enroulement hélicoïdal 9.

On entend par portion d'enroulement hélicoïdal 9 une portion ou tronçon de la protubérance 6 qui s'enroule en hélice autour de la direction d'élongation. Cette portion de protubérance 6 présente une génératrice qui est non linéaire, notamment en forme d'hélice.

Autrement dit, certaines ou toutes les protubérances 6 s'enroulent autour de la direction d'élongation suivant une courbe dont une tangente en chaque point fait un angle constant avec une direction donnée qui est ici la direction d'élongation.

La direction d'élongation est la direction allant de la base de la protubérance vers son extrémité libre. Elle peut être assimilée à un axe orthogonal ou incliné par rapport à la direction principale X. L'axe peut faire saillie de l'âme suivant une direction sensiblement normale par rapport à la direction principale X, dite direction radiale ou pouvant faire saillie en formant un angle avec la direction principale X différent de 90 °, c'est-à-dire un axe incliné en direction d'une des extrémités de l'âme.

De façon avantageuse, l'enroulement hélicoïdal 9 présente au moins une spire. Cela permet notamment de former un sillon suffisant de manière à améliorer l'enveloppement des parties à maquiller et donc une meilleure répartition du produit cosmétique.

L'enroulement hélicoïdal 9 permet de former un sillon (non représenté) dans lequel le produit cosmétique peut être stocké. Un réservoir supplémentaire de produit cosmétique est ainsi formé.

De plus l'enroulement hélicoïdal 9 permet d'augmenter la longueur L de la protubérance 6 et ainsi créer un effet de souplesse lors du maquillage. On obtient ainsi des protubérances 6 plus souples permettant de restituer le produit cosmétique sur la partie à maquiller tout en souplesse. L'utilisateur a ainsi une impression de douceur lorsqu'il se maquille.

La souplesse des protubérances 6 facilite aussi l'entrée et/ou la sortie de l'applicateur du récipient.

Par ailleurs la forme en hélice des protubérances permet de mieux envelopper la partie à maquiller, notamment les cils, et permet une meilleure répartition du produit cosmétique. Dans le cas de cils, ceux-ci peuvent se loger dans le sillon créé par la forme en hélice des protubérances permettant d'envelopper aussi bien les surfaces supérieure et inférieure des cils que leurs parties latérales. Ceci permet d'en augmenter leur volume.

Dans les modes de réalisation représentés aux différentes figures, toutes les protubérances 6 présentent un enroulement hélicoïdal 9 s'étendant sur toute la longueur L.

Dans d'autres variantes de réalisation non représentées, les protubérances 6 peuvent présenter un enroulement hélicoïdal 9 sur seulement une partie de leur longueur L. De préférence, la portion d'enroulement hélicoïdal 9 est située sur une portion externe des protubérances 6, c'est-à-dire radialement distale. Autrement dit, la portion d'enroulement hélicoïdal 9 est située entre le milieu de la longueur L et l'extrémité distale 6a libre de la protubérance 6 ou encore au-delà de la moitié en direction de l'extrémité distale libre 6a de la protubérance 6.

La portion d'enroulement hélicoïdal 9 peut ainsi s'étendre sur au moins 1/4 de la longueur des protubérances 6, voire sur au moins 1/3, 1/2, 2/3, 3/4, de la longueur des protubérances 6.

On peut aussi envisager que les protubérances 6 présentent plusieurs portions d'enroulement hélicoïdal 9. Les portions d'enroulement hélicoïdal 9 peuvent par exemple être alternées avec des portions droites (non représentées).

On entend par « portion droite » une portion de la longueur de la protubérance 6 ne présentant pas un enroulement hélicoïdal 9, autrement dit la génératrice de cette portion est linéaire.

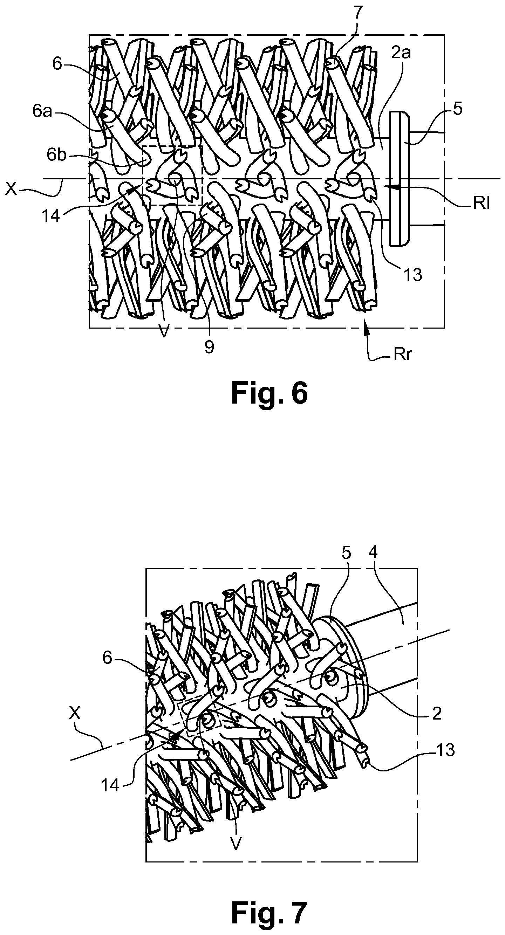

En outre, comme représenté aux figures 5 à 11, les protubérances 6 peuvent comprendre au moins une rainure 13.

La au moins une rainure 13 peut s'étendre sur tout ou partie de la longueur L de la protubérance 6. La rainure 13 peut s'étendre sur une portion de protubérance 6 présentant un enroulement hélicoïdal 9 ou sur une portion droite. On obtient ainsi une protubérance 6 rainurée ou une portion de protubérance 6 rainurée.

Les portions comprenant au moins une rainure 13 peuvent être alternées avec des portions lisses, c'est-à-dire des portions de protubérances 6 ne comprenant pas de rainures 13.

Les rainures 13 jouent le rôle de réservoir supplémentaire et permettent ainsi un stockage plus important de produit cosmétique, notamment de mascara.

Comme illustré aux figures 5 à 7, la rainure 13 peut s'étendre en suivant le profil de la protubérance 6. Ainsi sur une portion droite, la rainure 13 est droite. Dans le cas d'une portion présentant un enroulement hélicoïdal 9, la rainure 13 suit l'enroulement hélicoïdal et s'étend parallèlement à cet enroulement hélicoïdal 9 comme cela est représenté aux figures 5 à 7.

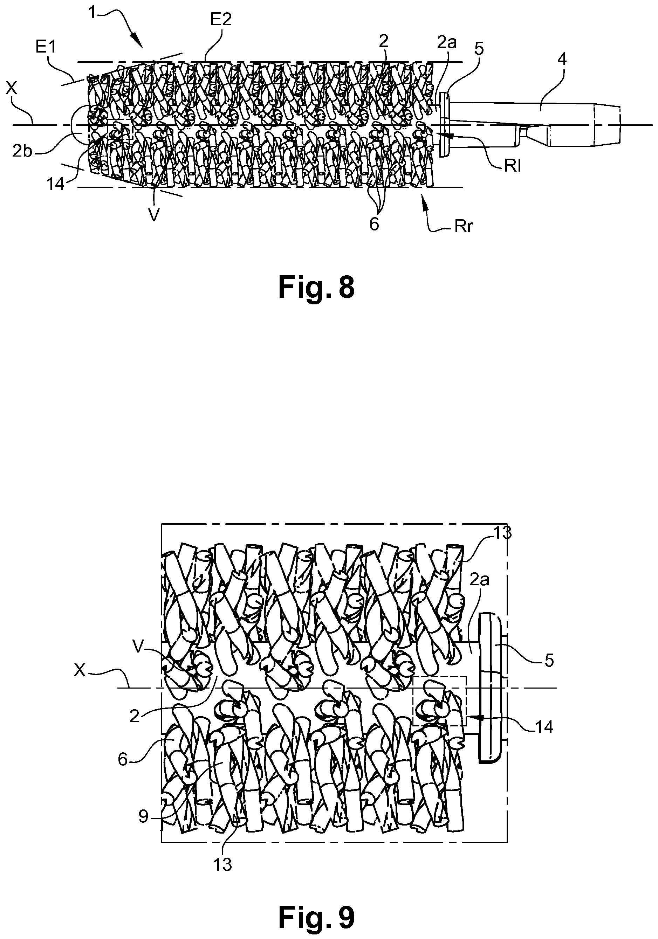

Dans des variantes de réalisation illustrées aux figures 8 à 11, la rainure 13 peut aussi s'étendre en s'enroulant autour de la protubérance 6. Cet enroulement donne un effet de torsion à la protubérance. La protubérance semble vrillée sur elle-même.

Ainsi, l'applicateur 1 comprend au moins une protubérance 6 comprenant au moins une des portions de protubérance 6 suivantes :
- des portions de protubérance 6 présentant un enroulement hélicoïdal 9 et lisses,
- des portions de protubérance 6 présentant un enroulement hélicoïdal 9 et rainurées.

Par ailleurs, sans sortir du cadre de l'invention, l'applicateur 1 peut aussi comprendre au moins une des portions de protubérance 6 suivantes :
- des portions de protubérance 6 droites et lisses,
- des portions de protubérance 6 droites et rainurées.

De plus, une partie desdites protubérances 6 non-linéaires est implantée pour constituer une pluralité de groupes 14 dans chacun desquels lesdites protubérances 6 sont agencées de manière à délimiter centralement un espace (ou volume) V formant un réservoir de produit cosmétique. Autrement dit, les protubérances 6 sont disposées à la surface de l'âme 2 de manière qu'elles définissent les limites du volume V créant en leur centre une zone de stockage de produit cosmétique.

De manière à former cet espace V, chacun des groupes 14 comprend au moins deux protubérances 6 non-linéaires. De préférence, chacun des groupes 14 comprend au moins trois protubérances 6 non-linéaires.

Les protubérances 6 non-linéaires de chaque groupe 14 sont implantées à la surface de l'âme 2 de manière à former un polygone. Chaque sommet du polygone correspond à une protubérance 6 non-linéaires du groupe 14.

Les protubérances 6 non-linéaires de chacun des groupes 14 présentent un enroulement hélicoïdal 9 sensiblement de même sens et de même pas de manière que les trois protubérances semblent torsadées entre-elles. Cela permet de délimiter d'avantage le volume V central de stockage de produit cosmétique.

Les groupes 14 sont agencées en une pluralité de rangées RI, Rr qui s'étendent sur toute la périphérie de l'âme 2.

Dans la suite, on différenciera les rangées longitudinales RI et les rangées radiales Rr. Par rangée longitudinale RI, on entend une rangée de groupes 14 de protubérances 6, c'est-à-dire une succession de groupes 14 de protubérances 6 alignés ou sensiblement alignés, disposés le long de l'âme 2, sur une même ligne. Par rangée radiale Rr, on entend une rangée de groupes 14 de protubérances 6 disposés autour de l'âme 2, dans un même plan orthogonal à l'âme 2, le plan coupant l'âme 2 selon une direction qui est ici sensiblement circulaire.

Les rangées longitudinales RI s'étendent suivant la direction longitudinale X.

Dans les modes de réalisation représentés, les rangées longitudinales Rl présentent la caractéristique d'être inclinées par rapport à l'axe d'extension principale X. Plus précisément, les rangées longitudinales RI suivent ici des lignes sensiblement hélicoïdales, les lignes étant dessinées à la surface de l'âme 2, de sa première extrémité 2a à sa deuxième extrémité 2b. Toutes les rangées longitudinales Rl présentent la même inclinaison et sont parallèles entre elles.

Dans une variante de réalisation non représentée, les rangées longitudinales Rl sont parallèles à l'axe d'extension principal X.

L'espacement radial entre les rangées longitudinales RI autour de la périphérie de l'âme 2 se fait selon une distance angulaire α constante. La distance angulaire sera comprise dans l'intervalle [0° ; 90°] ; elle sera de l'ordre d'environ 60°.

Les exemples de réalisation illustrés ici présente six rangées longitudinales RI, ce nombre de rangées longitudinales Rl variant en fonction de la distance angulaire choisie entre les rangées longitudinales RI.

Dans les modes de réalisation représentés, les six groupes 14 de protubérances 6 de deux rangées radiales Rr successives sont décalés axialement et angulairement, l'une par rapport à l'autre, le long de l'axe d'extension X. Ce décalage angulaire permet ici la formation des rangées longitudinales RI hélicoïdales.

Dans une variante de réalisation non représentée, les protubérances 6 de deux rangées longitudinales RI adjacentes sont alignées axialement l'une par rapport à l'autre et forme une rangée radiale Rr. Deux rangées radiales Rr successives comprennent le même nombre de groupes 14 de protubérances 6.

Sur une même portion axiale, les rangées présentent le même nombre de groupes 14 de protubérances 6, à plus ou moins une protubérance près. Autrement dit, les rangées Rl présentent sensiblement le même pas entre leurs protubérances 6.

Dans l'exemple représenté à la figure 2, les rangées longitudinales Rl sont hélicoïdales et comprennent seize groupes 14 de protubérances 6.

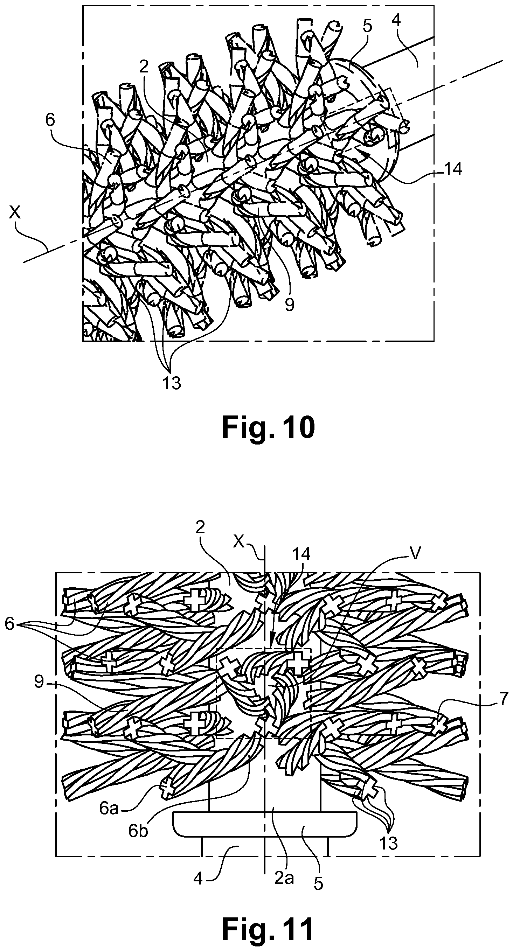

Dans le premier mode de réalisation illustré aux figures 2 à 4, l'applicateur 1 comprend des protubérances 6 faisant saillie à partir de l'âme 2 suivant la direction radiale. Les protubérances 6 situées vers la deuxième extrémité 2b de l'âme 2 présentent des hauteurs H différentes de manière à former une enveloppe E2 en forme d'ogive. Le reste des protubérances 6 présente une même hauteur H et elles forment quant à elles une enveloppe sensiblement cylindrique E1. Dans ce mode de réalisation, toutes les protubérances 6 sont lisses et non-linéaires. Elles présentent un enroulement hélicoïdal 9 s'étendant sur toute leur longueur L. Les protubérances 6 sont disposées par groupe 14 de trois protubérances 6 à la surface de l'âme 2 de manière à former un triangle, chaque protubérances 6 étant un sommet de ce triangle. Les groupes 14 de protubérances 6 sont agencés en rangées longitudinales Rl sensiblement hélicoïdales.
Dans le deuxième mode de réalisation illustré aux figures 5 à 7, l'applicateur 1 comprend des protubérances 6 faisant saillie à partir de l'âme 2 suivant la direction radiale. Les protubérances 6 représentées présentent une même hauteur H de manière à former une enveloppe sensiblement cylindrique E1. Dans ce mode de réalisation, toutes les protubérances 6 sont non-linéaires et présentent un enroulement hélicoïdal 9 s'étendant sur toute leur longueur L. Les protubérances 6 sont disposées par groupe 14 de trois protubérances 6 à la surface de l'âme 2 de manière à former un triangle, chaque protubérances 6 étant un sommet de ce triangle. Les groupes 14 de protubérances 6 sont agencés en rangées longitudinales Rl sensiblement hélicoïdales. Ces protubérances 6 comprennent en outre une rainure 13 qui s'étend sur toute la longueur L de la protubérance 6 et qui suit l'enroulement hélicoïdal 9.
Dans le troisième mode de réalisation illustré aux figures 8 à 10, l'applicateur 1 comprend des protubérances 6 faisant saillie à partir de l'âme 2 suivant la direction radiale. Les protubérances 6 représentées présentent une même hauteur H de manière à former une enveloppe sensiblement cylindrique E1. Dans ce mode de réalisation, toutes les protubérances 6 sont non-linéaires et présentent un enroulement hélicoïdal 9 s'étendant sur toute leur longueur L. Les protubérances 6 sont disposées par groupe 14 de trois protubérances 6 à la surface de l'âme 2 de manière à former un triangle, chaque protubérances 6 étant un sommet de ce triangle. Les groupes 14 de protubérances 6 sont agencés en rangées longitudinales Rl sensiblement hélicoïdales. Ces protubérances 6 comprennent en outre une rainure 13 qui s'étend sur toute la longueur L de la protubérance 6 et qui s'enroule autour de la protubérance 6.
Dans le quatrième mode de réalisation illustré à la figure 11, l'applicateur 1 comprend des protubérances 6 faisant saillie à partir de l'âme 2 suivant la direction radiale. Les protubérances 6 représentées présentent une même hauteur H de manière à former une enveloppe sensiblement cylindrique E1. Dans ce mode de réalisation, toutes les protubérances 6 sont non-linéaires et présentent un enroulement hélicoïdal 9 s'étendant sur toute leur longueur L. Les protubérances 6 sont disposées par groupe 14 de trois protubérances 6 à la surface de l'âme 2 de manière à former un triangle, chaque protubérances 6 étant un sommet de ce triangle. Les groupes 14 de protubérances 6 sont agencés en rangées longitudinales Rl sensiblement hélicoïdales. Ces protubérances 6 comprennent en outre quatre rainures 13 qui s'étendent sur toute la longueur L de la protubérance 6 et qui s'enroulent autour de la protubérance 6. Les rainures 13 au nombre de quatre sont régulièrement réparties sur le pourtour de la protubérance 6. On obtient ainsi des protubérances 6 présentant une section transversale 7 en forme de croix.

Toute autre forme de section transversale 7 peut être envisagée. La forme de la section transversale 7 des protubérances 6 est notamment déterminée par le nombre de rainures 13 présentes sur la protubérance 6. En fonction du profil de la protubérance 6, la forme de la section transversale 7 peut varier le long de la longueur de la protubérance 6.

De façon avantageuse, chacune des protubérances non-linéaires 6 présentent un profil général similaire, c'est-à-dire, par exemple, un même nombre de spire(s), une disposition uniforme, une même orientation par rapport à la direction principale X, une même section transversale.

Il est à noter aussi que l'applicateur 1 forme avantageusement, une brosse.

De préférence, l'applicateur 1 décrit ci-dessus est obtenu par un procédé de fabrication additive.

On entend par procédé de fabrication additive ou synthèse additive, un procédé de fabrication par ajout de matière, généralement assisté par ordinateur. Un tel procédé de fabrication est aussi appelé impression tridimensionnelle ou encore impression 3D.

L'utilisation de l'impression tridimensionnelle pour fabriquer l'applicateur 1 permet de réaliser une âme 2 et des protubérances 6 avec des formes originales et complexes qui pourraient s'avérer très complexes voire impossibles à obtenir par un procédé classique de moulage par injection. Il est ainsi possible de réaliser, directement et par une unique opération de fabrication, la forme complexe qui donnera ses caractéristiques à la protubérance. De plus, cette technique permet de s'affranchir de l'utilisation de moules complexes.

Différentes technologies de fabrication additive connues de l'homme du métier peuvent être utilisées. Notamment, il peut s'agir de :
- dépôt de fil en fusion (FDM, pour *Fused deposition modeling* en anglais),
- fusion sélective par laser (SLM pour *Selective Laser Melting* en anglais),
- frittage sélectif par laser (SLS pour *Selective Laser Sintering* en anglais),
- fusion par faisceau d'électrons (EBM pour *Electron Beam Melting* en anglais),
- stéréolithographie ou photopolymérisation (SLA pour *Stereolithography Apparatus* en anglais), ou
- modélisation d'objets laminés (LOM pour *Laminated Object Manufacturing* en anglais).

De préférence, il s'agit des technologies de frittage et/ou de stéréolithographie.

L'invention concerne encore un procédé de fabrication d'un applicateur 1 tel que décrit ci-dessus. Le procédé comprend :
- une étape d'élaboration d'un modèle numérique de l'applicateur 1 ;
- une étape de fabrication de l'applicateur 1 au moyen du modèle numérique.

Le modèle numérique est un fichier informatique qui correspond à un modèle virtuel de l'applicateur 1. Pour l'obtenir, l'applicateur 1 est tout d'abord modélisé de manière à obtenir un modèle CAO qui est ensuite converti dans un format approprié tel qu'un fichier .STL. Le fichier est ensuite exploité sur une machine de fabrication additive. Lors de sa lecture, le modèle numérique est découpé en un certain nombre de couches en fonction de la précision souhaitée. De préférence, les couches correspondent à une section transversale 7 de l'applicateur 1, c'est-à-dire une section de l'applicateur 1 prise dans un plan perpendiculaire à la direction principale X.

Les matériaux appropriés pour fabriquer l'âme 2 et les protubérances 6 par une impression tridimensionnelle sont les polyamides, les résines photosensibles, l'acide polylactique (PLA), l'acrylonitrile butadiène styrène (ABS).

L'invention concerne aussi un ensemble applicateur 15 pour produit cosmétique, comprenant un récipient 17 comprenant un corps formant un réservoir destiné à contenir le produit cosmétique (non représenté), et un applicateur 1, tel que décrit précédemment, adapté pour être fixé sur le récipient 17, de sorte que l'applicateur 1 est logé à l'intérieur du réservoir. L'applicateur 1 est fixé, par exemple, à une extrémité proximale 3a de la tige 3, elle-même fixée à un bouchon 19 avantageusement vissé au récipient 17.

Il est à noter qu'après montage, le manchon 4 est situé dans la tige 3 et la première extrémité 2a (proximale) de l'âme 2 correspond à l'extrémité distale 3b de la tige.

En outre, pour éviter que l'applicateur 1 ne soit trop chargé en produit cosmétique, le récipient 17 pourra comprendre un essoreur 21, fixé à l'intérieur du goulot. Lorsque l'utilisateur extrait l'applicateur 1 du récipient 17, l'applicateur 1 coulisse à l'intérieur de l'essoreur 21. L'essoreur 21 racle le produit cosmétique en excès sur la tige 3 et sur l'applicateur 1.

L'essoreur 21 permet ainsi de régler la quantité de produit présent sur l'applicateur 1 et évite une application excessive de produit cosmétique sur les cils.

## Revendications

1. Applicateur (1) pour produit cosmétique, comprenant une âme (2) s'étendant le long d'une direction d'extension longitudinale (X), dite direction principale, et une pluralité de protubérances (6) venues de matière avec l'âme (2), les protubérances (6) s'étendant d'une extrémité proximale (6b) reliée à l'âme (2) vers une extrémité distale (6a) libre selon une direction d'élongation de manière à définir une longueur (L), où au moins une partie des protubérances (6), dites protubérances non-linéaires, présente une génératrice non-linéaire sur au moins une partie de leur longueur (L), et où au moins une partie desdites protubérances (6) non-linéaires sont implantées pour constituer une pluralité de groupes (14) dans chacun desquels lesdites protubérances (6) non-linéaires sont agencées de manière à délimiter centralement un espace (V) formant un réservoir de produit cosmétique, le groupe (14) de protubérances (6) comprenant au moins trois protubérances non-linéaires, **caractérisé en ce que** tout ou partie des protubérances (6) non-linéaires présentent au moins un enroulement hélicoïdal (9) sur au moins une portion de leur longueur (L), dite portion d'enroulement hélicoïdal (9), l'enroulement hélicoïdal (9) des protubérances (6) non-linéaires d'un même groupe (14) étant sensiblement de même sens et de même pas de manière que les protubérances semblent torsadées entre-elles.

2. Applicateur (1) selon la revendication précédente, dans lequel les protubérances 6 non-linéaires de chaque groupe (14) sont implantées à la surface de l'âme (2) de manière à former un polygone.

3. Applicateur (1) selon l'une quelconque des revendications précédentes, dans lequel les protubérances (6) comprennent au moins une rainure (13).

4. Applicateur (1) selon la revendication précédente, dans lequel la rainure (13) s'étend parallèlement audit au moins un enroulement hélicoïdal (9) et/ou en s'enroulant autour de la protubérance (6).

5. Applicateur (1) selon l'une quelconque des revendications précédentes, dans lequel l'applicateur (1) est obtenue par fabrication additive.

6. Ensemble applicateur (15) pour produit cosmétique, comprenant :
- un récipient (17) comprenant un corps formant un réservoir destiné à contenir le produit cosmétique, et
- un applicateur (1) du produit cosmétique selon l'une des revendications 1 à 5 adapté pour être fixé sur le récipient (17), de sorte que l'applicateur (1) est logé à l'intérieur du réservoir.

7. Procédé de fabrication d'un applicateur (1) pour produit cosmétique selon l'une quelconque des revendications 1 à 5, le procédé comprenant :
- une étape d'élaboration d'un modèle numérique de l'applicateur (1);
- une étape de fabrication de l'applicateur (1) au moyen du modèle numérique.

## Patentansprüche

1. Applikator (1) für ein kosmetisches Produkt, der einen Kern (2), der sich entlang einer Längserstreckungsrichtung (X), Hauptrichtung genannt, erstreckt, und eine Vielzahl von Vorsprüngen (6) umfasst, die mit dem Kern (2) einstückig sind, wobei sich die Vorsprünge (6) in einer Ausdehnungsrichtung von einem proximalen Ende (6b), das mit dem Kern (2) verbunden ist, zu einem freien distalen Ende (6a) so erstrecken, dass sie eine Länge (L) definieren, worin mindestens ein Teil der Vorsprünge (6), nichtlineare Vorsprünge genannt, über mindestens einen Teil ihrer Länge (L) eine nichtlineare Mantellinie aufweisen, und worin mindestens ein Teil der nichtlinearen Vorsprünge (6) so implantiert sind, dass sie eine Vielzahl von Gruppen (14) bilden, in denen jeweils die nichtlinearen Vorsprünge (6) so angeordnet sind, dass sie zentral einen Raum (V) begrenzen, der ein Reservoir für ein kosmetisches Produkt bildet, wobei die Gruppe (14) von Vorsprüngen (6) mindestens drei nichtlineare Vorsprünge umfasst, **dadurch gekennzeichnet, dass** alle oder ein Teil der nichtlinearen Vorsprünge (6) mindestens eine spiralförmige Wicklung (9) über mindestens einen Abschnitt ihrer Länge (L), spiralförmiger Wicklungsabschnitt (9) genannt, aufweisen, wobei die spiralförmige Wicklung (9) der nichtlinearen Vorsprünge (6) einer gleichen Gruppe (14) im Wesentlichen die gleiche Richtung und die gleiche Teilung aufweisen, sodass die Vorsprünge miteinander verdreht erscheinen.

2. Applikator (1) nach dem vorstehenden Anspruch, wobei die nichtlinearen Vorsprünge 6 jeder Gruppe (14) an der Oberfläche des Kerns (2) so implantiert sind, dass sie ein Polygon bilden.

3. Applikator (1) nach einem der vorstehenden Ansprüche, wobei die Vorsprünge (6) mindestens eine Nut (13) umfassen.

4. Applikator (1) nach dem vorstehenden Anspruch, wobei sich die Nut (13) parallel zu der mindestens einen spiralförmigen Wicklung (9) und/oder um dem Vorsprung (6) herumwickelnd erstreckt.

5. Applikator (1) nach einem der vorstehenden Ansprüche, wobei der Applikator (1) durch additive Fertigung erhalten wird.

6. Applikatoranordnung (15) für ein kosmetisches Produkt, umfassend:
- einen Behälter (17), der einen Körper umfasst, der ein Reservoir zur Aufbewahrung des kosmetischen Produkts bildet, und
- einen Applikator (1) des kosmetischen Produkts nach einem der Ansprüche 1 bis 5, der dazu angepasst ist, an dem Behälter (17) befestigt zu werden, so dass der Applikator (1) im Inneren des Reservoirs untergebracht ist.

7. Verfahren zur Herstellung eines Applikators (1) für ein kosmetisches Produkt nach einem der Ansprüche 1 bis 5, wobei das Verfahren umfasst:
- einen Schritt zum Erstellen eines digitalen Modells des Applikators (1);
- einen Schritt zum Herstellen des Applikators (1) mittels des digitalen Modells.

## Claims

1. Applicator (1) for cosmetic product, comprising a core (2) extending along a longitudinal extension direction (X), called main direction, and a plurality of protrusions (6) integral with the core (2), the protrusions (6) extending from a proximal end (6b) connected to the core (2) to a free distal end (6a) along an elongation direction so as to define a length (L), wherein at least some of the protrusions (6), called non-linear protrusions, has a non-linear generator over at least some of its length (L), and wherein at least some of said non-linear protrusions (6) are implanted to constitute a plurality of groups (14) in each of which said non-linear protrusions (6) are arranged so as to delimit centrally a space (V) forming a cosmetic product reservoir, the group (14) of protuberances comprising at least three non-linear protrusions, **characterised in that** all or some of the non-linear protrusions (6) have at least one helicoidal winding (9) over at least some of their length (L), called helicoidal winding portion (9), the helicoidal winding 9 being substantially in the same direction and in the same step such that the protrusions appear twisted together.

2. Applicator (1) according to the preceding claim, wherein the non-linear protrusions 6 of each group (14) are installed on the surface of the core (2) so as to form a polygon.

3. Applicator (1) according to any one of the preceding claims, wherein the protrusions (6) comprise at least one groove (13).

4. Applicator (1) according to the preceding claim, wherein the groove (13) extends parallel to said at least one helicoidal winding (9) and/or by winding around the protrusion (6).

5. Applicator (1) according to any one of the preceding claims, wherein the applicator (1) is obtained by additive manufacturing.

6. Applicator unit (15) for cosmetic product, comprising:
- a container (17) comprising a body forming a reservoir intended to contain the cosmetic product, and
- an applicator (1) of the cosmetic product according to any one of claims 1 to 5 adapted to be fixed on the container (17), such that the applicator (1) is housed inside the reservoir.

7. Method for manufacturing an applicator (1) for cosmetic product according to any one of claims 1 to 5, the method comprising:
- a step of developing a digital model of the applicator (1);
- a step of manufacturing the applicator (1) by means of the digital model.
